Europäisches Patentamt

(19) European Patent Office

Office européen des brevets

(11) Publication number: **0 032 278**
**B1**

(12) **EUROPEAN PATENT SPECIFICATION**

(45) Date of publication of patent specification: 01.08.84

(51) Int. Cl.³: **G 08 B 13/16**

(21) Application number: **80300109.8**

(22) Date of filing: **11.01.80**

(54) Ultrasonic detection system.

(43) Date of publication of application:
22.07.81 Bulletin 81/29

(45) Publication of the grant of the patent:
01.08.84 Bulletin 84/31

(84) Designated Contracting States:
BE DE FR IT NL

(56) References cited:
US - A - 3 474 400
US - A - 3 967 283
US - A - 4 028 690
US - A - 4 054 871

(73) Proprietor: **Eurolec Group Limited**
**Unit C Mill Mead**
**Staines, Middlesex (GB)**

(72) Inventor: **Gibson, William James**
**18 Camdom Avenue**
**Feltham Middlesex (GB)**

(74) Representative: **Amann, Hannes Gerhart**
**H.G. Amann and Company 27 Hillersdon Avenue**
**London, SW13 0EG (GB)**

Courier Press, Leamington Spa, England.

## Description

This invention is concerned with ultrasonic intruder detection systems.

A variety of detection methods have been proposed to detect the movement of an object within the range of an ultrasonic detection system, but one main practical problem is to provide for relative immunity from ultrasonic interference giving rise to false alarms. Such interference may be caused for example by the changing density of air produced by fan heaters, and this in turn results in a variation of the echo pattern of fixed objects within the range of the detection system. Another source of interference is ultrasonic noise produced for example by a metallic object, such as a spanner, which has been dropped, or by a bell ringing. This practical problem at least partly arises due to difficulties in setting the sensitivity of the detection system.

U.S. Patent No. 3474400 discloses an ultrasonic movement detection system wherein a radiation source radiates into an area of detection, signals reflected from objects in the area of detection are converted into electrical echo signals fed to an amplifier which, in order to provide an adequate output for signals reflected from objects at differing distances, has an amplification factor variable with time, and a detector receiving the amplified signals and which is associated with an electronic gate switched by a control signal to enable selection of the listening period for the purpose of excluding extraneous signals.

From U.S. Patent No. 3967283 is known a radar detection system which enables detection of moving objects with elimination of Doppler effects. A significant parameter derived from the sum of echo signals obtained during a succession of several sweeps is compared with the correspondingly obtained parameter during a preceding succession of sweeps.

However, neither of the above patents provides a complete solution to the problem of detecting moving intruders in the area of detection whilst avoiding false alarms due to the detection of extraneous events.

It is therefore an object of the present invention to provide an ultrasonic detection system which is less sensitive to interference but which nevertheless retains high sensitivity with respect to moving intruders in the detection area.

According to one aspect of the present invention, there is provided an ultrasonic detection system comprising ultrasonic signal transmitting source and signal receiving means for radiating ultrasonic signals which are reflected by objects in the area of detection to be converted into electrical echo signals, an amplifying means for receiving the echo signals and having an amplification characteristic which is variable with time, and a detecting means fed with the output of the amplifier means, said detecting means including an electronic gate which is switched by means of a cyclic control signal alternately to accept and reject the amplified echo signals, characterised in that the amplifying means is arranged in such a manner that echo signals relating to objects closer to the ultrasonic signal source are amplified less than echo signals relating to objects further from said source, and in that the frequency of the control signal is selected so that the area of detection is effectively divided into a substantial plurality of alternative active and inactive zones with respect to the detection of radiation reflected from objects in the area of detection which are closer to and further from the source, whereby the echo of an object moving between said zones will give rise to appearing and disappearing patterns of signals at the output of said detecting means.

According to another aspect of the present invention, in a method of ultrasonic detection of movement, ultrasonic signals are radiated into the area of detection to be reflected by objects in said area and the reflected signals are converted into electrical echo signals, the echo signals are fed to an amplifier, the output of which is fed through a gate opened and closed at a frequency effective to subdivide the area of detection into a substantial plurality of alternating active and inactive zones, and the gated output of the amplifier obtained during a given cyclic period of operation by summing the magnitudes of echo signals received from objects in the active zones is compared with the said gated output similarly obtained during the preceding cyclic period.

The system according to the invention has the advantage that the sensitivity may be appropriately chosen to avoid false alarms without impairing its ability to detect moving intruders.

A preferred embodiment of an ultrasonic intruder detection system in accordance with the present invention will now be particularly described with reference to the accompanying drawings, in which:

Figure 1 is a block diagram showing the component parts of the detection system;

Figure 2 is a representation of the timing pulses as they occur in various parts of the detection system shown in Figure 1;

Figure 3 is a representation of the operating waveforms at various points in the detection system shown in Figure 1, and

Figure 4 is a block diagram of an alarm means fed with alarm detect pulses from the circuit of Figure 1.

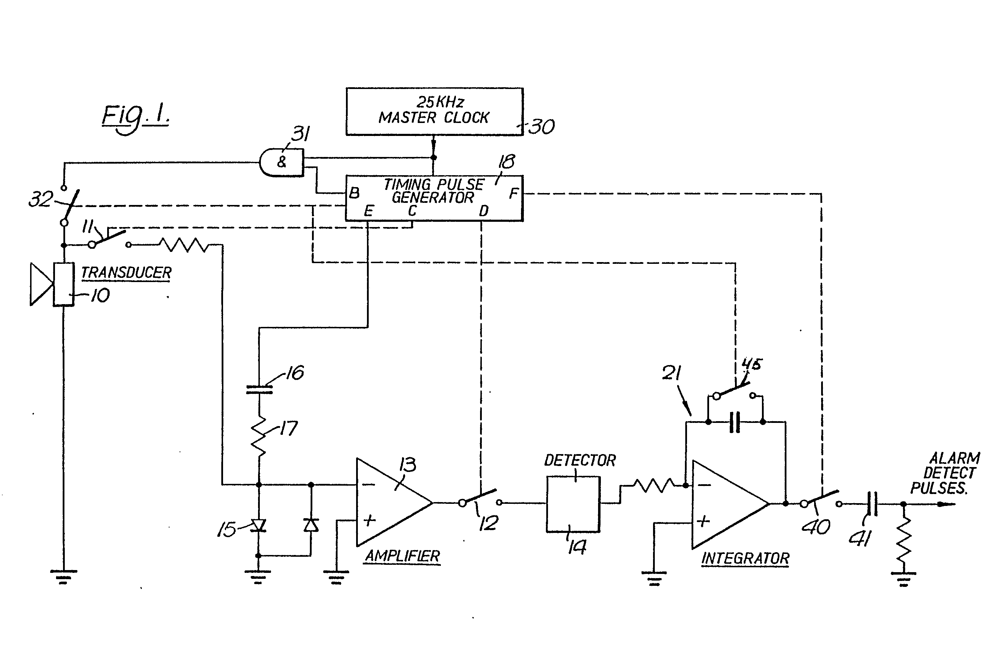

Referring to Figure 1 of the drawings, an ultrasonic intruder detector system comprises a transmitter/receiver constituted by an ultrasonic transducer 10 of the piezoelectric type arranged to transmit ultrasonic bursts of 1 to 2 msec. duration, at a frequency of 25 kHz, at cyclic intervals of approximately 180 milliseconds. On completion of each transmission burst, an electronic switch 11 in the form of an analogue gate connects the transducer 10 to the input of a high gain amplifier 13. An oscilloscope, for example forming part of the detector generally indicated at 14, would display the output of this amplifier 13 as an echo envelope, in response to ultrasonic waves reflected from objects in the area of detection to be incident on the transducer 10.

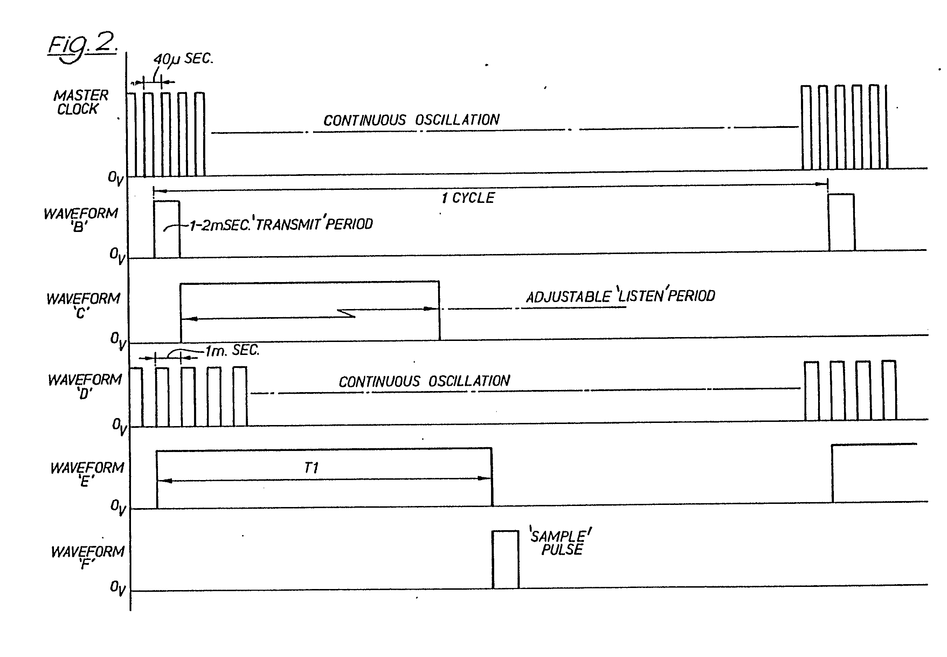

As shown in Figure 1, the transmission of ultrasonic signals is controlled by means of a master clock 30 and a timing pulse generator 18. The master clock 30 operates at 25 kHz, and, in addition to supplying pulses of this frequency to the transducer 10 in order to activate it, also supplies pulses at 25 kHz frequency to the timing pulse generator 18, which contains various conventional frequency dividing and delay circuits for generating specific waveforms (waveforms B to F in Figure 2) used for control purposes at various points in the detector system. One such waveform (waveform B) is supplied both to an AND gate 31 and to an electronic switch 32 in circuit with the master clock 30 and the transducer 10, whereby to produce the above-described ultrasonic bursts. In connection with Figure 2, it is to be noted that the time scale for the master clock waveform is larger than the time scale employed to illustrate waveforms B to F.

If the amplifier 13 were perfectly linear, the average height of the echo peaks seen at the detector 14 would fall off exponentially with time. Attenuating means are provided, however, in effect to attenuate echos from objects in the detection area closer to the transducer 10, that is to say early echos, and they leave echos from objects at a greater distance from the transducer 10, also referred to as late echos, at or near their original amplitude. Thus, assuming a similar reflective index for these objects, late echos emanating from more distant objects will appear at the detector 14 to be of similar magnitude to the early echos from closer objects, so that the sensitivity of the system remains substantially constant with the distance of the object from the transducer 10.

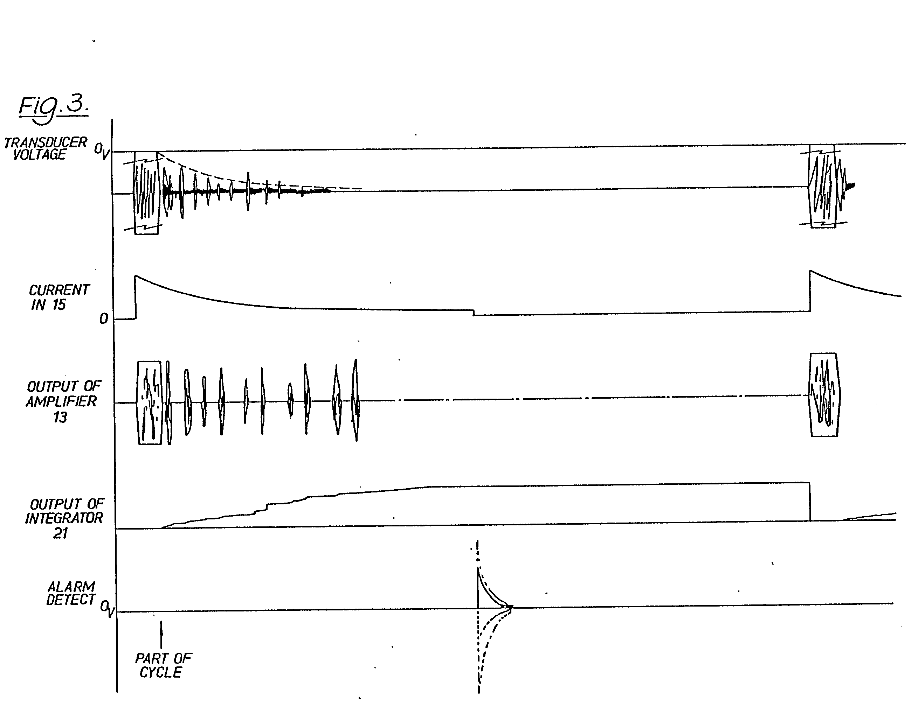

The attenuating means is in the form of a variable current source consisting of a capacitor 16, resistance 17 and diode 15, connected in series between the pulse generator 18 and ground. The junction between the resistor-capacitor network 16, 17 and the diode 15 is connected to the input to the amplifier 13. At the beginning of each cyclic interval of operation, the attenuating means is supplied with a square waveform of duration $T_1$ (say 15 to 20 msecs), which is referred to as the response period. This produces an exponentially reducing current in the diode 15, over the response period, as indicated by the second waveform in Figure 3. This current is supplied to the amplifier input in effect to reduce the magnitude of early echo signals. Taken together, the amplifier 13 and the variable current source 16, 17, 15 constitute an amplifying means which, over the response period, has an amplification factor which increases approximately exponentially with time, thus generally compensating for the reducing magnitude of the echo peaks with distance, which on average reduce according to the factor $1/D^2$ or $1/T^2$, where D is the distance from the transducer 10 and T is time (proportional to D). This is illustrated by the first waveform in Figure 3, showing the transducer voltage. In this waveform the magnitude of the echo peaks during transmission bursts is reduced for reasons of clarity.

Detection of movement is by means of an electronic switch in the form of an electronic analogue gate 12 and an electronic integrator 21. The analogue gate 12 is controlled by a 1 kHz square wave of unit duty cycle (waveform D in Figure 2), which effectively divides the detection area in front of the ultrasonic transducer 10 into a substantial plurality of alternate active and inactive zones, with radii increasing by increments of about 6 inches. Hence a moving object will alternately pass through an active zone and then an inactive zone, and an echo, for example from an intruder moving within the detection area covered by the system, would give rise to an appearing and disappearing signal on the echo envelope of an osilloscope forming part of the detector 14.

The analogue gate 12 is connected in series between the output of the amplifier 13 and the input of the integrator 21. The integrator 21 therefore provides an output which is the summation of the magnitude of echos received from objects in the active zones, i.e. echo signals received during the positive excursions of waveforms D. At the termination of each operating cycle the voltage at the output of the integrator 21 is an indication of the total echo magnitude of all the active zones. Comparison of this voltage between successive cycles indicates if any object has moved into or out of the active zone.

Comparison of the integrator outputs between successive cycles is effected by means of the sampling switch 40 and capacitor 41. The sampling switch 40 is closed once during each operating cycle, for example at the end of the period $T_1$ of waveform D, to store the integrator output on the capacitor 41. An alarm detect pulse is produced, on the output side of the capacitor 41, when the output of the integrator for a given cycle differs from the stored output from the preceding cycle. The difference between the two integrator outputs determines the polarity and magnitude of the alarm detect pulse. Waveform F in Figure 2 shows an example of a sample pulse, which is supplied by the timing pulse generator 18. It is also to be noted that the pulse generator 18 supplies pulses in accordance with waveform B to a switch 45 connected across the integrator 21, in order to reset the integrator at the end of each operating cycle.

Referring back to Figure 1, reference has been made to the electronic switch 11 which connects the transducer 10 with the amplifier 13. This switch is activated by a square waveform derived from the pulse generator 18 (waveform C in Figure 2). When the detection system is installed, the duration of square waveform C is adjusted, within the duration of an operating cycle, to give a listening period appropriate to the range of detection required.

A facility may be provided for a loudspeaker to be activated initially by alarm detect output pulses when the equipment is switched on, thus providing clicks in response to movement near the detector. With this arrangement, the loudspeaker subsequently can be actuated automatically by a suitable oscillator upon receipt of an alarm detect output pulse after the expiry of a fixed period of time since the previous alarm detect output pulse.

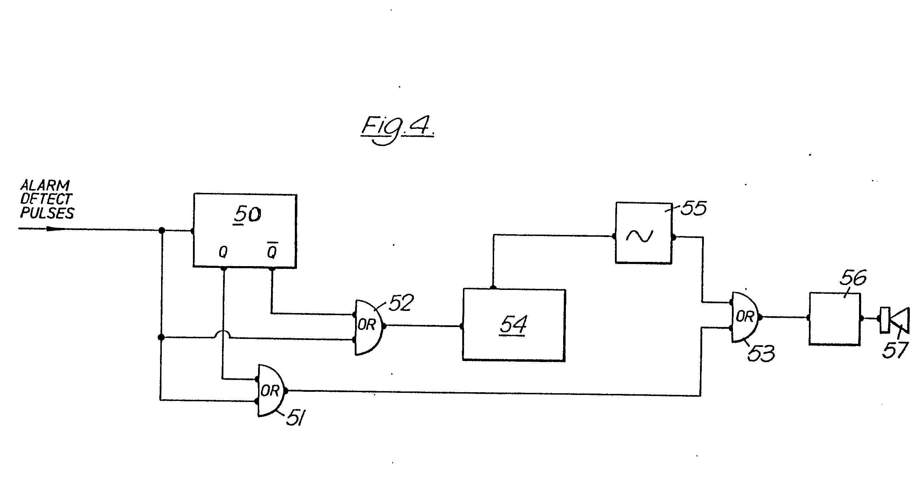

Thus, referring to Figure 4, the alarm detect pulses are supplied to a resetting monostable 50, with complementary outputs Q and $\overline{Q}$. At the incidence of an alarm detect pulse the output Q is high and the output $\overline{Q}$ is low for a predetermined period of time, this being a characteristic of the monostable 50, which reverts to its monostable state automatically after said certain period of time. With the arrival of a new alarm detect pulse after expiry of the period, a new period is started. The intervening period thus provides a time delay, referred to as an exit delay, to enable an operator to leave the protected area without causing the alarm to operate.

During the initial exit delay the alarm detect pulses are steered via OR gates 51 and 53 directly to a power amplifier 56 preceding the loudspeaker 57, creating clicks which serves to test that the system is operating corrrectly. On completion of the exit delay, Q goes low and $\overline{Q}$ goes high. On the arrival of a further alarm detect pulse, this pulse is steered via OR gate 52 to a second monostable 54 whose function is to time an alarm by activation of an oscillator 55, the output of which is fed through gate 53 to the amplifier 56 and loudspeaker 57. The alarm continues until the monostable 54 resets after a predetermined time.

It will be appreciated that, with the described arrangement, since the transmitted bursts of ultrasonic energy are very short in duration compared with the overall cycle time, power consumption is low. The minimum and maximum range of the system may be accurately preset without affecting its sensitivity to intruders. However, at the same time, the system is less prone than conventional systems to false operation due to interference.

## Claims

1. An ultrasonic movement detection system comprising ultrasonic signal transmitting source and signal receiving means (10) for radiating ultrasonic signals which are reflected by objects in the area of detection to be converted into electrical echo signals, an amplifying means (13, 15 to 17) for receiving the echo signals and having an amplification characteristic which is variable with time, and a detecting means (14) fed with the output of the amplifier means, said detecting means including an electronic gate (12) which is switched by means of a cyclic control signal alternately to accept and reject the amplified echo signals, characterised in that the amplifying means is arranged in such a manner that echo signals relating to objects closer to the ultrasonic signal source are amplified less than echo signals relating to objects further from said source, and in that the frequency of the control signal is selected so that the area of detection is effectively divided into a substantial plurality of alternate active and inactive zones with respect to the detection of radiation reflected from objects in the area of detection which are closer to and further from the source, whereby the echo of an object moving between said zones will give rise to appearing and disappearing patterns of signals at the output of said detecting means.

2. An ultrasonic detection system according to claim 1, in which means (18, 30) are provided to activate the source to transmit ultrasonic signal bursts at cyclic intervals, characterised in that the total output of the amplifying means obtained by summing the magnitudes of echo signals from objects in the active zones for one transmission burst is compared with the total output of said amplifying means similarly obtained for a preceding transmission burst, and in that the output of the amplifying means is fed to an integrator (21) cyclically reset at intervals corresponding to the intervals between transmission signal bursts.

3. An ultrasonic detection system as claimed in claim 2, in which the integrator output is stored, and for each cyclic interval said integrator output is compared with the stored output of the preceding cyclic interval.

4. An ultrasonic detection system as claimed in claim 3, including a comparator (40, 41) which provides a movement detect output pulse when the stored outputs of successive cyclic intervals are different.

5. An ultrasonic detection system as claimed in claim 1, in which the output of the detecting means is fed to a circuit which includes an alarm and a timing circuit (Figure 4) operative to provide an initial delay period during which the alarm is not activated by the output of the detecting means and an operator is enabled to leave the area of detection.

6. An ultrasonic detection system as claimed in claims 4 and 5, in which the timing circuit is responsive to the movement detect pulses.

7. An ultrasonic detection system according to any of claims 1 to 6, in which the ultrasonic signal transmitting source and signal receiving means is constituted by a single transducer.

8. An ultrasonic detection system as claimed in any one of claims 1 to 7, in which, over a given response period, the amplification factor of the amplifying means increases approximately exponentially with time.

9. An ultrasonic detection system as claimed in any one of claims 1 to 8, in which the amplifying means comprises an amplifier (13) and a variable current source (15, 16, 17), the amplifier having an input fed with the echo signals and with the output of the variable current source.

10. An ultrasonic detection system as claimed in claim 9 when dependent on claim 8, in which the variable current source comprises a capacitor-resistor network (16, 17) which, over the given response period, causes a diode (15) connected to the amplifier input to conduct an exponentially decaying current.

11. An ultrasonic detection system as claimed in any one of claims 1 to 10, including a switch (11) which can be operated to connect the amplifying means to the receiving means for a selectably variable listening period.

12. A method of ultrasonic detection of movement according to which ultrasonic signals are radiated into the area of detection to be reflected by objects in said area and the reflected signals are converted into electrical echo signals, the echo signals are fed to an amplifier, the output of which is fed through a gate opened and closed at a frequency effective to subdivide the area of detection into a substantial plurality of alternating active and inactive zones, and the gated output of the amplifier obtained during a given cyclic period of operation by summing the magnitudes of echo signals received from objects in the active zones is compared with the said gated output similarly obtained during the preceding cyclic period.

## Revendications

1. Un système de détection de mouvement à ultra-sons comprenant une source d'émission de signaux ultrasonores et un récepteur de signaux (10), pour l'émission de signaux ultrasonores qui sont réfléchis par des objets situés dans la zone de détection, puis convertis en signaux d'écho électriques, un amplificateur (13, 15, 17) recevant les signaux d'écho et ayant une caractéristique d'amplification variable avec le temps, et un détecteur (14) auquel est reliée la sortie de l'amplificateur, ce détecteur comprenant une porte électronique (12) connectée, à l'aide d'un signal de commande cyclique, pour accepter et rejeter alternativement les signaux d'écho amplifiés, caractérisé par le fait que l'amplificateur est conçu de telle sorte que les signaux d'écho relatifs à des objets plus proches de la source de signaux ultrasonores sont moins amplifiés que ceux relatifs à des objets plus éloignés de la source, et par le fait que la fréquence du signal de commande est sélectionnée de telle sorte que la zone de détection est divisée en une pluralité substantielle de zones alternativement actives et inactives en ce qui concerne la détection du rayonnement réfléchi par des objets dans la zone de détection qui sont plus proches et plus éloignés de la source, moyennant quoi l'écho d'un objet se déplaçant dans les zones mentionnées ci-dessus provoquera l'apparition et la disparition de structures de signaux à la sortie du dispositifs de détection.

2. Un système de détection à ultra-sons conformément à la revendication 1, comportant des éléments (18, 30) pour activer la source afin d'émettre des impulsions de signaux ultrasonores à des intervalles cycliques, caractérisé par le fait que la sortie totale de l'amplificateur obtenue en additionnant les valeurs des signaux d'écho provenant d'objets dans les zones actives pour une impulsion d'émission est comparée à la sortie totale de l'amplificateur obtenue de façon analogue pour une impulsion d'émission précédent, et par le fait que la sortie de l'amplificateur est introduite dans un intégrateur (21) remis à zéro cycliquement à des intervalles correspondant aux intervalles entre les impulsions de signaux d'émission.

3. Un système de détection à ultra-sons comme revendiqué dans la revendication 2, dans lequel la sortie de l'intégrateur est mémorisée et, pour chaque intervalle cyclique, la sortie de l'intégrateur précité est comparée à la sortie mémorisée de l'intervalle cyclique précédent.

4. Un système de détection à ultra-sons comme revendiqué dans la revedication 3, comprenant un comparateur (40, 41) qui fournit une impulsion de sortie de détection de mouvement lorsque les sorties mémorisées d'intervalles cycliques successifs sont différentes.

5. Un système de détection à ultra-sons comme revendiqué dans la revendication 1, dans lequel la sortie du dispositif de détection est introduite dans un circuit comprenant une alarme et un circuit d'horloge (figure 4) qui prévoit une période de délai initiale durant laquelle l'alarme n'est pas activée par la sortie du dispositif de détection permettant ainsi à un opérateur de quitter la zone de détection.

6. Un système de détection à ultra-sons comme revendiqué dans les revendications 4 et 5, dans lequel le circuit d'horloge est sensible aux impulsions de détection de mouvement.

7. Un système de détection à ultra-sons conformément à l'une quelconque des revendications 1 à 6, dans lequel la source d'émission de signaux ultrasonores et le récepteur de signaux sont constitués par un seul transducteur.

8. Un système de détection à ultra-sons comme revendiqué dans l'une quelconque des revendications 1 à 7, dans lequel le coefficient d'amplification de l'amplificateur augmente sur une période de réponse donnée, de façon à peu près exponentielle avec le temps.

9. Un système de détection à ultra-sons comme revendiqué dans l'une quelconque des revendications 1 à 8, dans lequel l'élément amplificateur comprend un amplificateur (13) et une source de courant variable (15, 16, 17), les signaux d'écho et la sortie de la source de courant variable étant introduits dans l'entrée de l'amplificateur.

10. Un système de détection à ultra-sons comme revendiqué dans les revendications 8 et 9, dans lequel la source de courant variable comprend un réseau condensateur-résistance (16, 17) qui, durant la période de réponse donnée, amène une diode (15) reliée à l'entrée de l'amplificateur, à conduire un courant décroissant de façon exponentielle.

11. Un système de détection à ultra-sons comme revendiqué dans l'une quelconque des revendications 1 à 10, comprenant un interrupteur (11) pouvant être actionné pour relier l'élément amplificateur au récepteur pendant une période d'écoute variable au choix.

12. Une méthode de détection de mouvement à ultra-sons suivant laquelle des signaux ultrasonores sont émis vers la zone de détection afin d'être réfléchis par des objets se trouvant dans cette zone; les signaux réfléchis sont convertis en signaux d'écho électriques, lesquels sont introduits dans un amplificateur dont la sortie est alimentée à travers une porte ouverte et fermée à une fréquence appropriée pour diviser la zone de détection en une pluralité substantielle de zones alternativement actives et inactives, la sortie verrouillée de l'amplificateur obtenue durant une période d'opération cyclique donnée en additionnant les valeurs des signaux d'écho reçus d'objets situés dans la zone active, étant comparée à la sortie verrouillée obtenue de façon analogue durant la période cyclique précédente.

**Patentansprüche**

1. Ultraschall-Bewegungsermittlungssystem mit einer Ultraschallsignal-Sendequellen- und Signalempfangsvorrichtung (10) zum Abstrahlen von Ultraschallsignalen, die durch Objekte im Erfassungsbereich reflektiert werden, um in elektrische Echosignale umgewandelt zu werden, einer die Echosignale empfangenden Verstärkeranordnung (13, 15 bis 17), deren Verstärkungscharakteristik zeitlich veränderbar ist, und einer mit dem Ausgangssignal der Verstärkeranordnung gespeisten Detektoranordnung (14), die ein elektronisches Tor (12) enthält, welches durch ein zyklisches Steuersignal so geschaltet wird, daß es die verstärkten Echosignale alternierend annimmt oder abweist, dadurch gekennzeichnet, daß die Verstärkeranordnung so ausgebildet ist, daß die Echosignale, die der Ultraschallsignalquelle näheren Objekten zugeordnet sind, weniger verstärkt werden als Echosignale, die weiter von der Quelle entfernten Objekten zugeordnet sind, und daß die Frequenz des Steuersignals so gewählt ist, daß der Erfassungsbereich effektiv in eine beträchtliche Anzahl von alternierenden aktiven und inaktiven Zonen bezüglich der Wahrnehmung von Strahlung, die von Objektiven im Erfassungsbereich reflektiert werden, die sich näher an bzw. weiter entfernt von der Quelle befinden, unterteilt wird, so daß das Echo eines Objekts, das sich zwichen den Zonen bewegt, erscheinende und verschwindende Muster von Signalen am Ausgang der Detektoranordnung entstehen läßt.

2. Ultraschallermittlungssystem nach Anspruch 1, bei welchem Mittel (18, 30) vorgesehen sind, um die Quelle zum Aussenden von Ultraschallsignal-Schwingungsimpulsen in zyklischen Intervallen zu aktivieren, dadurch gekennzeichnet, daß das Gesamtausgangssignal der Verstärkeranordnung, das durch Summieren der Größen der Echosignale von den Objekten in den aktiven Zonen für einen Sendeschwingungsimpuls erhalten wird, mit dem Gesamtausgangssignal der Verstärkeranordnung verglichen wird, das in entsprechender Weise für einen vorangehenden Sendeschwingungsimpuls erhalten wurde und daß das Ausgangssignal der Verstärkeranordnung einem Integrator (21) zugeführt ist, der in Intervallen, die den Intervallen zwischen den Sendesignalschwingungsimpulsen entsprechen, zyklisch zurückgestellt wird.

3. Ultraschallermittlungssystem nach Anspruch 2, dadurch gekennzeichnet, daß das Integratorausgangssignal gespeichert wird und daß das Integralausgangssignal für jedes zyklische Intervall mit dem gespeicherten Ausgangssignal des vorangehenden zyklischen Intervalles verglichen wird.

4. Ultraschallermittlungsystem nach Anspruch 3 mit einem Vergleicher (40, 41), der einen Bewegungsermittlungsausgangsimpuls liefert, wenn die gespeicherten Ausgangssignale aufeinanderfolgender zyklischer Intervalle verschieden sind.

5. Ultraschallermittlungssystem nach Anspruch 1, bei dem das Ausgangssignal der Detektoranordnung einer Schaltungsanordnung zugeführt wird, die einen Alarm und eine verzögerungsschaltung (Fig. 4) enthält, welche eine anfängliche Verzögerungsperiode erzeugt, während der der Alarm durch das Ausgangssignal der Detektoranordnung nicht aktiviert ist und es einer Bedienungsperson ermöglicht wird, den Erfassungsbereich zu verlassen.

6. Ultraschallermittlungssystem nach Anspruch 4 oder 5, bei der die Verzögerungsschaltung auf die Bewegungsermittlungsimpulse anspricht.

7. Ultraschallermittlungssystem nach einem der Ansprüche 1 bis 6, bei dem die Ultraschallsignal-Sendequellen- und Signalempfangsvorrichtung durch einen einzigen Wandler gebildet ist.

8. Ultraschallermittlungssystem nach einem der Ansprüche 1 bis 7, bei dem der Verstärkungsfaktor der Verstärkeranordnung während einer vorgegebenen Ansprechperiode ungefär exponentiell mit der Zeit ansteigt.

9. Ultraschallermittlungssystem nach einem der Ansprüche 1 bis 8, bei dem die Verstärkeranordnung einen Verstärker (13) und eine Quelle (15, 16, 17) für einen veränderlichen Strom enthält, und daß der Verstärker einen mit den Echosignalen und mit dem Ausgangssignal der den veränderlichen Strom liefernden Quelle gespeist ist.

10. Ultraschallermittlungssystem nach Anspruch ·9, bei Rückbeziehung auf Anspruch 8, bei welchem die Quelle für den veränderlichen Strom ein Kondensator-Widerstands-Netzwerk (16, 17) enthält, welches während der vorgegebenen Ansprechperiode eine Diode (15), die mit dem Verstärkereingang verbunden ist, veranlaßt, einen exponentiell abfallenden Strom zu leiten.

11. Ultraschallermittlungssystem nach einem der Ansprüche 1 bis 10, mit einem Schalter (11), der zum Verbinden der Verstärkeranordnung mit der Empfangsvorrichtung für eine wählbar veränderliche Lauschperiode betätigbar ist.

12. Verfahren zur Ermittlung einer Bewegung durch Ultraschall, bei dem Ultraschallsignale in einen erfassungsbereich abgestrahlt werden, um durch Objekte in diesen Bereich reflektiert zu werden, und die reflektierten Signale in elektrische Echosignale umgewandelt werden, die Echosignale einem Verstärker zugeführt werden, dessen Ausgangssignal durch ein Tor geleitet wird, das mit einer Frequenz geöffnet und geschlossen wird, die bewirkt, daß der Erfassungsbereich effektiv in eine beträchtliche Anzahl von alternierenden aktiven und inaktiven Zonen unterteilt wird, und das getastete Ausgangssignal des Verstärkers, das während einer vorgegebenen zyklischen Betriebsperiode durch Summierung der Größen der Echosignale erhalten wurde, die von Objekten in den aktiven Zonen empfangen wurden, mit dem getasteten Ausgangssignal verglichen wird, das in Entsprechender Weise während der vorangegangenen zyklischen Periode erhalten wurde.

Fig.1

*Fig.2.*

| | 40μ SEC. | |
| --- | --- | --- |

MASTER CLOCK

CONTINUOUS OSCILLATION

0ᵥ

WAVEFORM 'B'

1 CYCLE

1-2mSEC. 'TRANSMIT' PERIOD

0ᵥ

WAVEFORM 'C'

ADJUSTABLE 'LISTEN' PERIOD

0ᵥ

~1m. SEC.

WAVEFORM 'D'

CONTINUOUS OSCILLATION

0ᵥ

WAVEFORM 'E'

T1

0ᵥ

WAVEFORM 'F'

'SAMPLE' PULSE

0ᵥ

0 032 278

Fig.3.

TRANSDUCER VOLTAGE

CURRENT IN 15

OUTPUT OF AMPLIFIER 13

OUTPUT OF INTEGRATOR 21

ALARM DETECT

PART OF CYCLE

3

Fig.4.

ALARM
DETECT
PULSES